# EUROPÄISCHE PATENTSCHRIFT

(11) **EP 1 601 730 B1**
(45) Veröffentlichungstag und Bekanntmachung des Hinweises auf die Patenterteilung: **28.06.2006**
(21) Anmeldenummer: 05715887.5
(22) Anmeldetag: 09.03.2005
(51) Int. Cl.: C09D 11/18

(54) **NICHTWÄSSRIGE POLARE TINTENZUSAMMENSETZUNG**
NON-AQUEOUS POLAR INK COMPOSITION
COMPOSITION D'ENCRE POLAIRE NON AQUEUSE

(30) Priorität: 15.03.2004 DE 102004012479
(43) Veröffentlichungstag der Anmeldung: 07.12.2005
(73) Patentinhaber: Dokumental GmBh & Co. KG Schreibfarben, 67065 Ludwigshafen (DE)
(72) Erfinder: DEEG, Timm, 67157 Wachenheim (DE); STARINGER-KOHL, Karin, 69488 Birkenau (DE); WINK, Arno, 55234 Eppelsheim (DE)
(74) Vertreter: Hock, Joachim
(86) Internationale Anmeldenummer: PCT/EP2005/002503
(87) Internationale Veröffentlichungsnummer: WO 2005/092996

(56) Entgegenhaltungen:
- EP-A- 0 196 162
- EP-A- 0 587 291
- GB-A- 2 094 820
- US-A- 3 425 779

## Beschreibung

Die Erfindung betrifft eine nicht wasserbasierende Schreibtinte für ein Schreibgerät, insbesondere einen Kugelschreiber.

Von einem Kugelschreiber wird erwartet, daß er
a) ein weiches Schreibgefühl vermittelt
b) ohne Kappe lange Zeit schreibfähig bleibt, also lange Zeit offen lagerfähig ist
c) an der Schreibspitze keine Tropfen bildet und
d) eine wasserfeste Schrift liefert.

Herkömmliche Kugelschreiber, befüllt mit einer Paste auf Lösemittel-Basis, schreiben aufgrund ihrer relativ hohen Viskosität leicht bremsend, bilden an der Spitze kleinere Tropfen, sind jedoch lange offen lagerfähig und liefern eine wasserfeste Schrift. Das Weichschreiben einer solchen Kugelschreiberpaste kann verbessert werden, indem die Viskosität deutlich gesenkt wird. Dieses Ziel kann erreicht werden, wenn die verdickend wirkenden Anteile, wie Harze bzw. Polymere weggelassen oder wenigstens deutlich reduziert werden, wie in EP 0 738 302 B1 beschrieben. Nachteilig ist, daß eine niedrigviskose Tinte dieser Art verstärkt zu Static Leaking, d.h. zur Tropfenbildung an der Spitze bei senkrecht mit Spitze abwärts gelagertem Kugelschreiber neigt.

Dem gegenüber sind auch wasserbasierende Tinten beschrieben, die aus einem Kugelschreiber verschrieben werden. Diese Tinten haben jedoch den Nachteil, daß der Wasseranteil aufgrund seiner Leichtflüchtigkeit an der Spitze verdampft und zur Eintrocknung führt, so daß eine Abschlußkappe erforderlich ist, um dieses Problem zu verhindern. Ein weiterer Nachteil besteht darin, daß solche Tinten nur wasserlösliche Farbstoffe enthalten können, so daß keine völlig wasserfeste Schrift erhalten wird. Enthält eine solche Tinte andererseits Pigmente als Färbemittel, so wird die Schrift zwar wasserfest, die Gefahr der Austrocknung an der Spitze aber umso größer.

Somit besteht die Notwendigkeit für eine Kugelschreibertinte, welche die Vorteile konventioneller Kugelschreiberpasten und wasserbasierender Tinten in sich vereinigt, ohne deren Nachteile aufzuweisen.

Diese Aufgabe wird durch die in den Ansprüchen gekennzeichneten Ausführungsformen gelöst. Insbesondere wird eine nicht wässrige polare Tintenzusammensetzung bereitgestellt, umfassend
a) 1-40 Gewichtsprozente mindestens eines wasserunlöslichen Färbemittels,
b) 50-98 Gewichtsprozente mindestens eines polaren Lösungsmittels, ausgewählt aus der Gruppe, bestehend aus Glykolen, Glykolethern, Alkoholen und Gemischen davon,
c) 0,05-5 Gewichtsprozente mindestens eines in dem eingesetzten polaren Lösungsmittel quellbaren quervernetzten Polymers, ausgewählt aus der Gruppe, bestehend aus Homo- und Copolymeren von Acrylsäure oder Alkylacrylaten, quervernetzt mit Polyalkenylethern, Divinylglykol, Allylethern von Pentaerythrol, Allylethern von Sucrose oder Allylethern von Propylen, und quervernetzten Homo- und Copolymeren von Maleinsäureanhydridmethylvinylether,
wobei die Gewichtsprozentangaben jeweils auf das Gesamtgewicht der Tintenzusammensetzung bezogen sind, und wobei die Tintenzusammensetzung eine Viskosität in einem Bereich von 30 bis 6.000 mPas bei 20°C aufweist.

Die erfindungsgemäße Tintenzusammensetzung auf nicht-wässriger Basis vermittelt ein weiches Schreibgefühl, bleibt ohne Kappe lange Zeit schreibfähig, bildet an der Schreibspitze keine Tropfen und liefert eine wasserfeste Schrift. In diesem Zusammenhang ist auch bemerkenswert, daß die erfindungsgemäßen Schreibtinten im wesentlichen keine Viskoelastizität zeigen.

Im Rahmen der vorliegenden Erfindung wird unter einer nicht wässrigen polaren Tintenzusammensetzung eine solche verstanden, die im wesentlichen kein oder nur geringfügige Mengen, d.h. 0 bis max. 8 Gew.-%, vorzugsweise 0 bis max. 5 Gew.-%, mehr bevorzugt 0 bis max. 3 Gew.-% an Wasser als Lösungsmittel beinhaltet. Mit anderen Worten ist die nicht wässrige polare Tintenzusammensetzung gemäß der vorliegenden Erfindung eine solche auf Lösemittel-Basis.

Eine Möglichkeit, um eine wasserfeste Tinte zu erhalten, die an der Spitze auch nach längerer Zeit nicht eintrocknet, ist die Verwendung von wasserunlöslichen Farbstoffen und von schwerflüchtigen Lösungsmitteln. Eine solche Tinte bildet jedoch an der Schreibspitze Tropfen, wenn keine verdickenden Anteile wie Harze oder Polymere enthalten sind, aber auch dann, wenn solche verdickenden Anteile zwar enthalten sind, aber in echt gelöster Form, d.h. vollständig gelöst, vorliegen,
wobei das Ausmaß der Tropfenbildung mit sinkender Viskosität zunimmt. Die Größe der bei Lagerung mit Spitze abwärts sich bildenden Tropfen kann bis zu mehreren Millimetern betragen.

Es wurde nun überraschend festgestellt, daß die Tropfenbildung an der Schreibspitze vermieden werden kann, wenn die erfindungsgemäße nichtwässrige Tinte ein unlösliches Polymer in dispergierter Form in Kombination mit dem spezifisch gewählten Lösungsmittelsystem enthält. Geeignete unlösliche Polymere sind quervernetzte Homo- oder Copolymere, die in einem geeigneten polaren Lösungsmittel auf das bis zu 1000-fache ihres ursprünglichen Volumens unter Ausbildung eines dreidimensionalen Netzwerks quellen. Ohne darauf festgelegt zu werden, wird angenommen, daß das auf diese Weise entstandene dreidimensionale Netzwerk auf die darin gespeicherte Tinte ein Rückhaltevermögen ausübt und das Austreten von Tinte an der Schreibspitze im Ruhezustand des Kugelschreibers wirkungsvoll verhindert.

Solche in polaren Lösungsmitteln quellbare quervernetzte Polymere sind gemäß der vorliegenden Erfindung hochmolekulare Homo- und Copolymere von Acrylsäure oder Alkylacrylaten, insbesondere C₁-C₃₀-Alkylacrylate, quervernetzt mit Polyalkenylethern, Divinylglykol, Allylethern von Pentaerythrol, Allylethern von Sucrose oder Allylethern von Propylen, und quervernetzten Homo- und Copolymeren von Maleinsäureanhydridmethylvinylether, quervernetzt mit beispielsweise Diolefinen wie 1,9-Decadien. Derartige in polaren Lösungsmitteln quellbare quervernetzte Polymere sind unter den Handelsnamen Carbopol, Pemulen, Acritamer bzw. Stabileze erhältlich. Vorzugsweise werden Homo- und Copolymere von Acrylsäure oder Alkylacrylaten, insbesondere C₁-C₃₀-Alkylacrylate, quervernetzt mit Polyalkenylethern oder Divinylglykol eingesetzt.

Die Verwendung quervernetzter Polymere in wasserbasierenden Tinten wird in der Literatur beschrieben, wie EP 0 717 090 B1 beispielhaft zeigt. Wasserbasierende Tinten haben jedoch den Nachteil, daß der Einsatz wasserunlöslicher Farbstoffe nicht möglich ist. Wasserunlösliche Farbstoffe sind in der Regel in organischen Lösungsmitteln, die nicht zu polar sind, löslich. Ein weiterer Nachteil derartiger Wasser-basierender Tinten ist die Gefahr der Eintrocknung an der Schreibspitze, wenn die Kappe nicht aufgesetzt ist. Überwiegend werden solche unter der Bezeichnung "Gel-Tinten" bekannten wäßrigen Schreibflüssigkeiten jedoch mit nicht-quervernetzten Polymeren hergestellt.

Die vorliegende Erfindung sieht die Verwendung von 50-98 Gewichtsprozente mindestens eines polaren Lösungsmittels, ausgewählt aus der Gruppe, bestehend aus Glykolen, Glykolethern, Alkoholen und Gemischen davon, vor. Insbesondere wird vorzugsweise ein Lösungsmittelgemisch vorgesehen, das nichtwässrig, aber polar genug ist, um quervemetzte Polymere quellen zu lassen, andererseits aber nicht so polar ist, daß sich wasserunlösliche Farbstoffe nicht darin lösen. In einer besonders bevorzugten Ausführungsform weist ein solches Lösungsmittelgemisch 60-90 Gewichtsprozente eines oder mehrerer Glykole und 10-40 Gewichtsprozente von einem oder mehreren Alkoholen und/oder Glykolethern, insbesondere solchen die mit Wasser nicht mischbar sind, bezogen auf die Gesamtlösungsmittelmenge, auf. Als solche Glykole können insbesondere Hexylenglykol, Propylenglykol und Dipropylenglykol bzw. ein Gemisch davon eingesetzt werden. In der vorliegenden Tintenzusammensetzung ist Propylenglykol ein bevorzugtes polares Lösungsmittel, das ausreichende Quellfähigkeit für quervemetzte Polymere und ausreichende Lösungseigenschaften für viele wasserunlösliche Farbstoffe in sich vereinigt. Beispiele von einem erfindungsgemäß geeigneten Alkohol bzw. Glykolether, insbesondere solchen, die mit Wasser nicht mischbar sind, welche aber besonders gute Löseeigenschaften, insbesondere bei Verwendung verlackter Farbsalze, aufweisen, sind - ohne darauf begrenzt zu sein - 2-Phenoxyethanol, Benzylalkohol, α-Methylbenzylalkohol, Diethylenglykolmonophenylether oder Propylenglykolmonophenylether. Die genaue Zusammensetzung des Lösungsmittels richtet sich nach Erfordernissen der Löslichkeit der verwendeten Färbemittel bzw. der Dispergierbarkeit der verwendeten Pigmente und des Quellvermögens der eingesetzten quervernetzten Polymere und kann durch einen Fachmann leicht bestimmt werden.

Gemäß der vorliegenden Erfindung werden 1 bis 40, vorzugsweise 1 bis 30, besonders bevorzugt 2 bis 20 Gewichtsprozente mindestens eines wasserunlöslichen Färbemittels eingesetzt. Als Färbemittel können im Rahmen der vorliegenden Erfindung Farbstoffe, Pigmente oder Gemische davon eingesetzt werden. Besonders geeignete Farbstoffe schließen verlackte Farbsalze ein, wie Solvent Blue 38, Solvent Blue 43, Solvent Red 39, Solvent Black 46, Solvent Yellow 47, ohne darauf beschränkt zu sein. Auch die Verwendung von Pigmenten in fein dispergierter Form ist möglich. Beispiele hierfür sind Pigment Black 7, Pigment Blue 15.3, Pigment Green 7, Pigment Red 122.

Ein weiteres Merkmal der erfindungsgemäßen Tintenzusammensetzung ist das weiche Schreibverhalten. Es ist bekannt, daß das weiche Schreibverhalten eines Kugelschreibers im wesentlichen durch die Viskosität der Tinte gesteuert wird und durch in der Tinte enthaltene Gleitmittel wie z.B. Ölsäure verbessert werden kann. Ist die Viskosität zu niedrig, kann ein kratziges, ist sie zu hoch, ein bremsendes Schreibgefühl entstehen. Die Viskosität der vorliegenden Tintenzusammensetzung wird durch die Anteile der Farbstoffe festgelegt, die verdickend wirken, und insbesondere durch den Anteil der quervernetzten Polymere und deren charakteristische Eigenschaften, wie z.B. den Grad der Quervemetzung. In diesem Zusammenhang ist zu beachten, dass quervemetzte Polymere sensibel auf Ionen, insbesondere Metallionen reagieren. So können beispielsweise kationische Verunreinigungen in den verwendeten Farbstoffen die Viskosität der Mischung senken. Die optimale Viskosität der hier beschriebenen weichschreibenden Tinte kann je nach dem Design der verwendeten Schreibspitzen in einem Bereich von 30 bis 6.000 mPas, vorzugsweise von 100 bis 4.000 mPas und besonders bevorzugt von 100 bis 2.000 mPas, gemessen bei 20°C mit einem Haake Rheostress RS600 mit Kegel C 35/2° bei einer Scherrate von 60 s⁻¹, liegen.

Die endgültige Einstellung der Viskosität erfolgt vorzugsweise in bekannter Art durch Neutralisation saurer Gruppen, wie COO⁻ Gruppen, der quervernetzten Polymere. Zur Neutralisation kommen anorganische oder, bevorzugt organische Basen wie Triethanolamin, Aminomethylpropanol, Triisopropanolamin in Frage, die üblicherweise in einer Menge von 0,1 bis 3 Gew.% eingesetzt werden. Femer kann die Tinte zur Viskositätseinstellung zusätzlich die für Schreibtinten bekannten Bindemittel und Polymere enthalten, sofern sie mit den quervernetzten Polymeren und den übrigen Rezepturbestandteilen verträglich sind. Auch der Einsatz bekannter Additive wie Korrosionsschutzmittel, Entschäumer, Komplexierungsmittel oder cap-off-Additive ist möglich.

Die vorliegende Erfindung wird durch die nachfolgenden Beispiele näher erläutert, ohne auf diese beschränkt zu sein.

Die in den nachstehenden Tabellen 1 und 2 gezeigten Tinten wurden mittels Dissolver-Scheibe bei 50°C gemischt. Zur Herstellung der Tinten in Tabelle 2 wurde zunächst das quervemetzte Polymer ca. 2 Stunden bei 1800 Umdrehungen/min im Lösemittelsystem dispergiert. Danach wurden die restlichen Bestandteile in der wie in der Tabelle gezeigten Reihenfolge zugegeben und ca. eine weitere Stunde gerührt. Zur Bestimmung der Tintenabgabe wurden Polypropylen-Minen mit Spitzen 133NS/07TC-ES 405 der Firma Premec befüllt und auf einem Hutt-Schreibtestgerät bei Raumtemperatur unter den folgenden Bedingungen auf Baumgartner-Testpapier geschrieben: Schreibgeschwindigkeit 9 m/min, Papiervorschub 5 cm/min, Schreibwinkel 70°, Rotation 1 rpm, Belastung 100 g. Die Messung der Viskositäten erfolgte mit dem vorstehend erwähnten Haake Rheostress RS600 bei einer Scherrate von 60 s⁻¹.

Alle Tinten in Tabelle 1 und 2 sind niedrig viskos, schreiben weich, zeigen eine wasserfeste Schrift und sind lange offenlagerfähig. Sie zeigen jedoch signifikante Unterschiede des Static Leaking nach Lagerung befüllter Minen mit Spitze abwärts. Die Tinten der Vergleichsbeispiele A1 bis A3, die zwei unterschiedliche nicht quervernetzte Polymere enthalten und des Vergleichsbeispiels A4, das kein Polymer enthält, führen zu großen Tropfen an der Schreibspitze, demgegenüber zeigen alle erfindungsgemäßen Tinten der Beispiele B1 bis B5, die ein quervernetztes Polymer enthalten, keine Tropfen an der Spitze. Im Beispiel B3 übernimmt eine Farbbase, C.I. Solvent Blue 4, die Funktion des Neutralisationsmittels. Wie die Beispiele ferner zeigen, erhöht sich insbesondere durch die Verwendung quervernetzter Polymere die Tintenabgabe der erfindungsgemäßen Tinten, bei denen eine vollständige Quellung hervorgerufen wird, um ca. 25%. Dies führt zu einem homogenen Schriftbild und zu höherer Farbintensität als bei ansonsten gleichartigen Tinten, die jedoch nicht-quervernetzte Polymere enthalten, und stellt einen weiteren Vorteil der erfindungsgemäßen Tinten dar; vgl. insbesondere die Beispiele B1 bis B5 gemäß der vorliegenden Erfindung.

**Tabelle 1**

| | A1 | A2 | A3 | A4 |
|---|---|---|---|---|
| Farbe der Tinte | schwarz | schwarz | schwarz | schwarz |
| Propylenglykol | | 67 | 66,1 | 68 |
| 2-Phenoxyethanol | 41,25 | 8,4 | 8,2 | 8,5 |
| Benzylalkohol | 41,25 | 8,4 | 8,2 | 8,5 |
| Luviskol K90 ²⁾ | 2 | 0,7 | | |
| Mowital B60H³⁾ | | | 2 | |
| Solvent Black 46 | 15 | 15 | 15 | 15 |
| Ölsäure | 0,5 | 0,5 | 0,5 | |
| Total | 100 | 100 | 100 | 100 |
| | | | | |
| Viskosität mPas/60s' | 380 | 290 | 450 | 90 |
| Polymer quervernetzt ja/nein | n | n | n | NA |
| Quellung | NA | NA | NA | NA |
| Static Leaking, mm Tropfen⁵⁾ | 1,0 | 2,0 | 1,3 | 4 |
| Tintenabgabe mg/100 m | 18,8 | 19 | 20,2 | 18 |

**Tabelle 2**

| | B1 | B2 | B3 | B4 | B5 |
|---|---|---|---|---|---|
| Farbe der Tinten | schwarz | blau | blau | rot | schwarz |
| Propylenglykol | 66,1 | 70,9 | 76,6 | 73,3 | 66,1 |
| 2-Phenoxyethanol | 8,3 | 9 | 9,5 | 9,2 | 8,3 |
| Benzylalkohol | 8,3 | 9 | 9,5 | 9,2 | 8,3 |
| Carbopol EDT 2623¹⁾ | 0,8 | 0,8 | 0,8 | 0,8 | |
| Pemulen 1622¹⁾ | | | | | 0,8 |
| Solvent Black 46 | 15 | | | | 15 |
| Solvent Blue 43 | | 8 | | | |
| Solvent Blue 4 | | | 2 | | |
| Solvent Red 39 | | | | 6 | |
| Triethanolamin | 1 | 1,8 | - | 1 | 1 |
| Ölsäure | 0,5 | 0,5 | 1,6 | 0,5 | 0,5 |
| Total | 100 | 100 | 100 | 100 | 100 |
| | | | | | |
| Viskosität mPas/60 s⁻¹ | 380 | 150 | 670 | 120 | 510 |
| Polymer quervernetzt ja/nein | j | j | j | j | j |
| Quellung ⁴⁾ | v | v | v | v | v |
| Static Leaking, mm Tropfen | 0 | 0 | 0 | 0 | 0 |
| Tintenabgabe mg/100 m | 25,3 | 24,6 | 24,7 | 23,2 | 24,2 |

| | | | | | |
|---|---|---|---|---|---|
| 1) Quervernetzte Polyacrylsäure der Firma Noveon | | | | | |
| 2) PVP der Firma BASF | | | | | |
| 3) PVB der Firma Clariant | | | | | |
| 4) Die Quellung wurde visuell nach Zugabe des quervernetzten Polymers, aber vor Zugabe des Farbstoffs, beurteilt. Bei vollständiger Quellung war die Mischung transparent, während sie bei unvollständiger Quellung noch viele weiße Partikel in fein verteilter Form enthielt; NA = Nicht anwendbar; v = vollständig | | | | | |
| 5) Die Minen wurden bis zu einer Höhe von ca. 10 cm befüllt, dann 20 h bei Raumtemperatur mit Spitze abwärts gelagert und der Durchmesser der an der Kugel ausgetretenen Tropfen bestimmt. Der angegebene Wert entspricht einem Durchschnitt von 3 Minen | | | | | |

## Patentansprüche

1. Nichtwässrige polare Tintenzusammensetzung, umfassend
a) 1-40 Gewichtsprozente mindestens eines wasserunlöslichen Färbemittels,
b) 50-98 Gewichtsprozente mindestens eines polaren Lösungsmittels, ausgewählt aus der Gruppe, bestehend aus Glykolen, Glykolethern, Alkoholen und Gemischen davon,
c) 0,05-5 Gewichtsprozente mindestens eines in dem eingesetzten polaren Lösungsmittel quellbaren quervernetzten Polymers, ausgewählt aus der Gruppe, bestehend aus Homo- und Copolymeren von Acrylsäure oder Alkylacrylaten, quervernetzt mit Polyalkenylethern, Divinylglykol, Allylethern von Pentaerythrol, Allylethern von Sucrose oder Allylethern von Propylen, und quervernetzten Homo- und Copolymeren von Maleinsäureanhydridmethylvinylether,
wobei die Gewichtsprozentangaben jeweils auf das Gesamtgewicht der Tintenzusammensetzung bezogen sind, und wobei die Tintenzusammensetzung eine Viskosität in einem Bereich von 30 bis 6.000 mPas, gemessen bei 20°C mit einem Haake Rheostress RS600 mit Kegel C 35/2° bei einer Scherrate von 60 s⁻¹, aufweist.

2. Tintenzusammensetzung gemäß Anspruch 1, wobei 0,2-1,5 Gewichtsprozente mindestens eines in dem eingesetzten polaren Lösungsmittel quellbaren quervernetzten Polymers enthalten sind.

3. Tintenzusammensetzung gemäß Anspruch 1 oder 2, wobei als quellbares quervernetztes Polymer Homo- und Copolymere von Acrylsäure oder Alkylacrylaten quervernetzt mit Polyalkenylethern oder Divinylglykol verwendet werden.

4. Tintenzusammensetzung gemäß einem der Ansprüche 1 bis 3, wobei ein polares Lösungsmittelgemisch von 60-90 Gewichtsprozenten von einem oder mehreren Glykolen und 10-40 Gewichtsprozente von einem oder mehreren Alkoholen und/oder Glykolethern, insbesondere solchen die mit Wasser nicht mischbar sind, bezogen auf die Gesamtlösungsmittelmenge, verwendet wird.

5. Tintenzusammensetzung gemäß Anspruch 4, wobei das Glykol aus Hexylenglykol, Propylenglykol oder Dipropylenglykol ausgewählt ist.

6. Tintenzusammensetzung gemäß Anspruch 5, wobei das Glykol Propylenglykol ist.

7. Tintenzusammensetzung gemäß einem der Ansprüche 4 bis 6, wobei der Alkohol bzw. Glykolether aus 2-Phenoxyethanol, Benzylalkohol, α-Methylbenzylalkohol, Diethylenglykolmonophenylether oder Propylenglykolmonophenylether ausgewählt ist.

8. Tintenzusammensetzung gemäß einem der Ansprüche 1 bis 7, wobei sich das **Färbemittel aus wasserunlöslichen Farbstoffen zusammensetzt.**

9. Tintenzusammensetzung gemäß Anspruch 8, wobei die wasserunlöslichen Farbstoffe verlackte Farbsalze sind.

10. Tintenzusammensetzung gemäß einem der Ansprüche 1 bis 9, wobei ferner ein oder mehrere Neutralisationsmittel enthalten sind.

11. Tintenzusammensetzung gemäß einem der Ansprüche 1 bis 10, weiter enthaltend Gleitadditive, Korrosionsschutzmittel, Komplexierungsmittel und/oder Entschäumer.

## Claims

1. Nonaqeuous polar ink composition comprising
a) 1-40 weight percent of at least one water-insoluble colorant,
b) 5-98 weight percent of at least one polar solvent selected from the group comprising of glycols, glycol ethers, alcohols and mixtures thereof,
c) 0.05-5 weight percent of at least one crosslinked polymer swellable in the polar solvent used, said polymer being selected from the group consisting of homo- and copolymers of acrylic acid or alkyl acrylates, crosslinked with polyalkenyl ethers, divinylglycol, allyl ethers or pentaerythrol, allyl ethers of sucrose or allyl ethers of propylene, and crosslinked homo- and copolymers of maleic anhydride-methyl vinyl ether,
all weight percentages being based on the total weight of the ink composition, the ink composition having a viscosity in a range of 30 to 6000 mPas, measured at 20°C with a Haake Rheostress RS600 using cone C 35/2° at a shear rate of 60s⁻¹.

2. Ink composition according to Claim 1, including 0.2-1.5 weight percent of at least one crosslinked polymer swellable in the polar solvent used.

3. Ink composition according to Claim 1 or 2, utilizing homo- and copolymers of acrylic acid or alkyl acrylates crosslinked with polyalkenyl ethers or divinylglycol as swellable crosslinked polymer.

4. Ink composition according to any one of Claims 1 to 3, utilizing a polar solvent mixture of 60-90 weight percent of one or more glycols and 10-40 weight percent of one or more alcohols and/or glycol ethers, especially those not miscible with water, based on total solvent.

5. Ink composition according to Claim 4, wherein the glycol is selected from hexylene glycol, propylene glycol or dipropylene glycol.

6. Ink composition according to Claim 5, wherein the glycol is propylene glycol.

7. Ink composition according to any one of Claims 4 to 6, wherein the alcohol or glycol ether is selected from 2-phenoxyethanol, benzyl alcohol, α-methylbenzyl alcohol, diethylene glycol monophenyl ether or propylene glycol monophenyl ether.

8. Ink composition according to any one of Claims 1 to 7, wherein the colorant is composed of water-insoluble dyes.

9. Ink composition according to Claim 8, wherein the water-insoluble dyes are lakes.

10. Ink composition according to any one of Claims 1 to 9, further including one or more neutralizing agents.

11. Ink composition according to any one of Claims 1 to 10, further including gliding additives, corrosion inhibitors, complexing agents and/or defoamers.

## Revendications

1. Composition d'encre polaire non aqueuse comprenant :
a) 1-40 % en poids d'au moins une matière colorante insoluble dans l'eau ;
b) 50-98 % en poids d'au moins un solvant polaire choisi dans le groupe composé des glycols, des éthers de glycol, des alcools et de leurs mélanges ;
c) 0,05-5 % en poids d'au moins un polymère réticulé pouvant gonfler dans le solvant utilisé, choisi dans le groupe composé des homopolymères et copolymères de l'acide acrylique ou d'acrylates d'alkyle réticulés avec des polyalcényléthers, du divinylglycol, des allyléthers de pentaérythrol, des allyléthers de sucrose ou des allyléthers de propylène, et des homopolymères ou copolymères réticulés de l'éther méthylvinylique de l'anhydride maléique ;
dans laquelle les pourcentages en poids sont rapportés respectivement au poids total de la composition d'encre, et dans laquelle la composition d'encre présente une viscosité dans un domaine de 30 à 6 000 mPa.s, mesurée à 20°C avec un Haake Rheostress RS600 avec un cône C 35/2° sous un taux de cisaillement de 60 s⁻¹.

2. Composition d'encre selon la revendication 1, dans laquelle est contenu 0,2-1,5 % en poids d'au moins un polymère réticulé pouvant gonfler dans le solvant polaire utilisé.

3. Composition d'encre selon la revendication 1 ou 2, dans laquelle sont utilisés comme polymère réticulé pouvant gonfler des homopolymères ou copolymères de l'acide acrylique ou d'acrylates d'alkyle réticulés avec des polyalcényléthers ou du divinylglycol.

4. Composition d'encre selon l'une des revendications 1 à 3, dans laquelle est utilisé un mélange polaire de solvants de 60-90 % en poids de un ou plusieurs glycols et 10-40 % en poids de un ou plusieurs alcools et/ou éthers de glycol, en particulier de ceux qui ne sont pas miscibles à l'eau, rapportés à la quantité totale de solvant.

5. Composition d'encre selon la revendication 4, dans laquelle le glycol est choisi parmi l'hexylèneglycol, le propylèneglycol ou le dipropylèneglycol.

6. Composition d'encre selon la revendication 5, dans laquelle le glycol est du propylèneglycol.

7. Composition d'encre selon l'une des revendications 4 à 6, dans laquelle l'alcool ou l'éther de glycol est choisi parmi le 2-phénoxyéthanol, l'alcool benzylique, l'α-méthylbenzylalcool, le diéthylèneglycol monophényléther ou le propylèneglycol monophényléther.

8. Composition d'encre selon l'une des revendications 1 à 7, dans laquelle la matière colorante se compose de colorants insolubles dans l'eau.

9. Composition d'encre selon la revendication 8, dans laquelle les colorants insolubles dans l'eau sont des sels colorés pigmentés.

10. Composition d'encre selon l'une des revendications 1 à 9, dans laquelle sont contenus en plus un ou plusieurs agents de neutralisation.

11. Composition d'encre selon l'une des revendications 1 à 10, contenant en plus des additifs de glissement, des additifs anti-corrosion, des complexants et/ou des agents anti-mousse.
